Europäisches Patentamt

European Patent Office

Office européen des brevets

(11) Veröffentlichungsnummer: **0 246 463**
A1

(12) **EUROPÄISCHE PATENTANMELDUNG**

(21) Anmeldenummer: 87106031.5

(22) Anmeldetag: 22.12.81

(51) Int. Cl.³: **H 02 H 3/33**

(30) Priorität: 23.12.80 DE 3048785

(43) Veröffentlichungstag der Anmeldung:
25.11.87 Patentblatt 87/48

(84) Benannte Vertragsstaaten:
BE CH FR GB IT LI NL SE

(60) Veröffentlichungsnummer der früheren
Anmeldung nach Art. 76 EPÜ: 0 054 958

(71) Anmelder: BROWN, BOVERI & CIE Aktiengesellschaft
Kallstadter Strasse 1
D-6800 Mannheim 31(DE)

(72) Erfinder: Schaufuss, Erich, Dr. Ing.
Am Schelmenbuckel 57
D-6800 Mannheim(DE)

(74) Vertreter: Rupprecht, Klaus, Dipl.-Ing. et al,
c/o BROWN, BOVERI & CIE AG Postfach 10 03 51
Zentralbereich Patente
D-6800 Mannheim 1(DE)

(54) Schaltungsanordnung zur Erfassung eines Fehlerstromes.

(57) Es wird eine Fehlerstromerfassungs- und Verarbeitungsanordnung angegeben, bei der ein integrierter Schaltkreis (14) als Einrichtung zur Erfassung und Auswertung von Sekundärwicklungern (12, 13) von Summenstromwandlern (10, 11) abgegebenen Fehlerstromsignals verwendet wird. Die Einrichtung (14) wird mittels zusätzlicher Elemente (15, 90, 44) beschaltet, wodurch eine Nulleiter-Uberwachung sowohl bei Wechselfehlerströmen als auch bei Gleichfehlerströmen bewirkt wird, wobei ein Ansprechen auf Störsignale vermieden ist.

Fig. 3

BROWN, BOVERI & CIE Aktiengesellschaft

Mannheim                                    09. März 1987

Mp.-Nr. 654/80A                             ZPT/P4-Ft/Wi


## Schaltungsanordnung zur Erfassung eines Fehlerstromes

Die Erfindung betrifft eine Schaltungsanordnung gemäß dem Oberbegriff des Anspruches.

Fehlstromschutzschalter der eingangs genannten Art werden neuerdings immer mehr mit elektronischen Einrichtungen zum Verstärken und Verarbeiten des von der Sekundärwicklung des Summenstromwandlers erzeugten Fehlerstromsignales eingesetzt. Dabei gibt es eine Reihe von integrierten Schaltkreisen, die insbesondere bei sinusförmigen Fehlerströmen mit geeigneter Zusatzbeschaltung durchaus zu vernünftigen Fehlerstromschutzschaltern führen.

Die bekannten integrierten Schaltkreise besitzen dabei einen Operationsverstärker, auf dessen Eingang die Enden der Sekundärwicklung aufgeschaltet sind, welcher Operationsverstärker ggf. mit weiteren elektronischen Schaltelementen ein Signal erzeugt, das zur Aufladung eines

Konde. stc s verwendet werden kann, der meist außerhalb des Schaltkreises angeordnet ist und der einen im Inneren des Schaltkreises liegenden Speicher, Latch genannt, setzt, so daß dieser das Gate eines Thyristors gegebenenfalls über ein weiteres elektronisches Schaltelement, wie z. B. einen Transistor, zum Durchzünden des Thyristors bzw. allgemein des Halbleiterventils ansteuert, wodurch ein Auslöser betätigt wird.

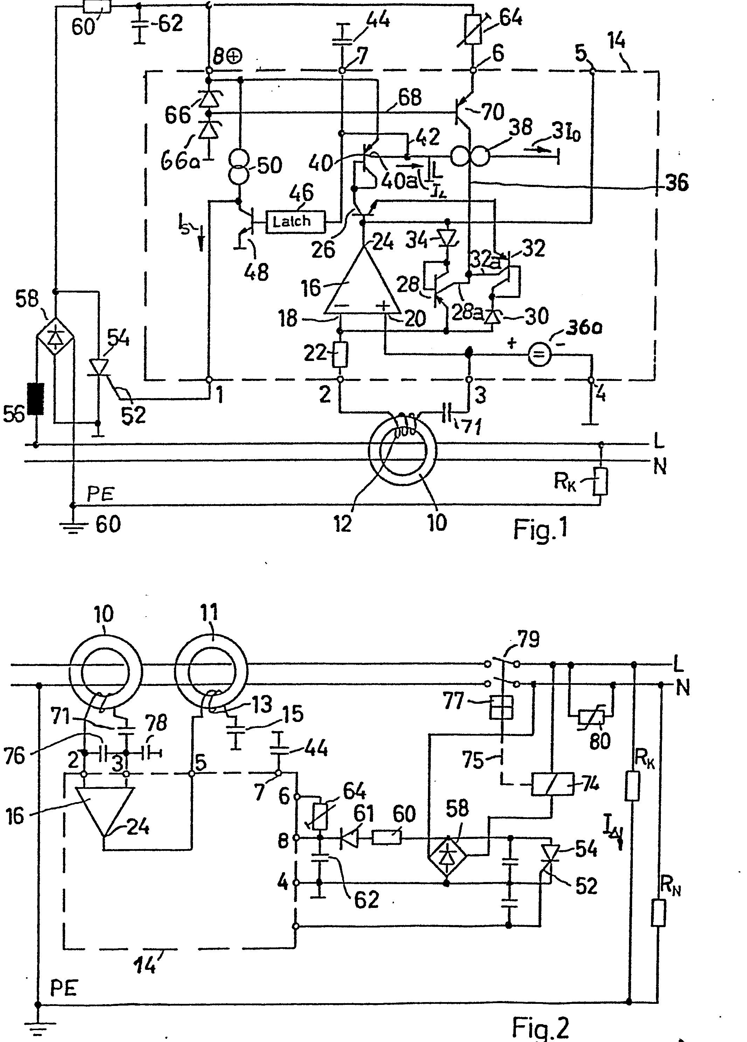

Eine Schaltungsanordnung, die für sinusförmige Fehlerströme verwendet werden kann, ist durch das Datenblatt GFI (ground fault) IC LM 1851 der Firma National Semiconductor, Corp., USA, April 1978, Figur 1 und 2, bekannt geworden.

Ein Problem besteht darin, daß bei netzseitig geerdetem Neutralleiter ein Erdschluß des Neutralleiters auf der Lastseite ebenso wie ein Fehlerstrom des Phasenleiters gegen Erde eine Auslösung des Schutzschalters bewirken muß, bei dem die erfindungsgemäße Schaltungsanordnung verwendet werden soll. Eine bekannte Neutralleiter-Überwachung ist in der Figur 2 dgestellt. Sie besitzt einen zusätzlichen Summenstromtransformator mit einer zusätzlichen Sekundärwicklung, die mit ihrem einen Anschluß über einen Kondensator an Null Volt liegt und mit ihrem zweiten Anschluß an den Ausgang eines in einer als integrierter Schaltkreis ausgebildeten Einrichtung zur Erfassung und Verstärkung von Fehlerstrom-Signalen enthaltenen Operationsverstärkers angeschlossen ist.

Aufgabe der Erfindung ist es daher, eine Schaltungsanordnung der eingangs genannten Art noch weiter zu verbessern.

**0246463**

Diese Aufgabe wird erfindungsgemäß durch die kennzeichnenden Merkmale des Anspruches gelöst.

Wenn also auf der Lastseite beispielsweise ein Erdschluß des Neutralleiters auftritt, wird insgesamt eine Kurzschlußwindung oder Kurzschlußring gebildet, der eine Rückkopplung bewirkt, wodurch die beiden Summenstromtransformatoren oder Summenstromwandler mit ihren Wicklungen miteinander gekoppelt werden. Durch diese Rückkopplung wird über den Operationsverstärker eine mittelfrequente Schwingung angefacht. Die Wirkungsweise der Rückkopplung und die Verstärkung sind tragende Elemente der Anordnung. Die erfindungsgemäße Ausgestaltung bildet dabei den Schwingkreis zur Erzeugung der Mittelfrequenz, wobei dieser durch den rückgekoppelten Operationsverstärker angefacht wird. Ohne die erfindungsgemäß eingesetzte Diode würde im Prinzip zwar auch eine Auslösung stattfinden und zwar wie folgt:

Durch die Rückkopplung wird eine Schwingung in jenem Schwingungskreis angefacht, der aus der Sekundärwicklung des zweiten Summenstromwandlers und der Primärwicklung gebildet ist. Dadurch wird in der Primärwicklung, also in den Leitern, ein Strom erzeugt, der in dem ersten Summenstromwandler als Fehlerstrom gemessen wird, wodurch eine Abschaltung erfolgt. Der Kondensator und die mit ihm den Schwingkreis bildende Sekundärwicklung des weiteren Summenstromwandlers legen in der Hauptsache die Frequenz fest. Wenn nun im Falle eines Erdschlußstromes die Schwellenspannung der Diode überschritten ist, findet eine plötzliche Aufladung des zeitbestimmenden Kondensators statt, wodurch eine Auslösung erfolgt. Der Vorzug dieser Einrichtung ist ein Ansprechen bei geringeren Erdschlußströmen als beim Betrieb ohne Diode. Durch die Schwellenspannung der Diode wird ein Ansprechen auf Störsignale vermieden.

0246463

Anhan der Zeichnung in der Ausführungsbeispiele der Erfindung dargestellt sind, sollen die Erfindung sowie weitere vorteilhafte Ausgestaltungen und Verbesserungen sowie weitere Vorteile näher erläutert und beschrieben werden.

Es zeigt:

Figur 1 ein Blockschaltbild einer bekannten Fehlerstromschutzschalteranordnung mit einem integrierten Schaltkreis, der in bevorzugter Weise für die erfindungsgemäße Schaltungsanordnung Verwendung findet, wobei zum besseren Verständnis und zwecks besserer Erläuterung eine Schaltung und mit nur einem Wandler dargestellt ist,

Figur 2 eine weitere Ausgestaltung einer bekannten Schaltungsanordnung mit zwei Wandlern, und

Figur 3 eine Schaltungsanordnung zur Verbesserung der Überwachung des Nulleiters auf Erdschluß.

Ein Netz einer elektrischen Versorgung besitzt eine Phasenleiter L und einen Neutralleiter N. Die beiden Leiter L und N sind durch einen Summenstromwandler 10 hindurchgeführt und wirken als Primärwicklung. Der Summenstromwandler 10 besitzt ferner eine Sekundärwicklung 12, die auf Eingänge 2 und 3 eines strichliert dargestellten integrierten Schaltkreises 14 aufgeschaltet sind. Dieser integrierte Schaltkreis ist ein Schaltkreis, der von der Firma National Semiconductor, Corp. USA, unter der Bezeichnung LM 1851 in den Handel gebracht wird. Im Inneren des integrierten Schaltkreises 14 befinden sich ein Operationsverstärker 16 mit einem sogenannten invertierenden Eingang 18 und einem nht invertierenden Eingang 20. Der invertierende Eingang ist über einen Eingangswiderstd 22 mit der Eingangsklemme 2 verbunden, wogegen der nicht invertierende Eingang 20 mit der Eingangsklemme 3 verbunden ist. Die Sekundärwicklung 12 ist also auf den Eingang 18 und den Eingang 20 des Operationsverstärkers geschaltet.

Der Ausgang 24 des Operationsverstärkers ist nmal auf die Basis eines Transistors 26 und zum anderen auf die Ausgangsklemme 5 des integrierten Schaltkreises 14 geschaltet. Der invertierende Eingang 18 ist mit dem Emitter eines Mehrfachkollektortransistors 28 und der Anode einer Z-Diode 30 verbunden. Die Kathode der Z-Diode 30 ist mit der Basis und einem Kollektor eines zweiten Mehrfachkollektortransistors 32 verbunden. Der Transistor 32 wird ebenso wie der Transistor 28 in Stromspiegelschaltung betrieben.

Der Ausgang des Operationsverstärkers 24 ist mit der Anode einer weiteren Z-Diode 34 verbunden, deren Kathode ebenso wie die der Z-Diode 30 auf die Basis und einen Kollektor des Transistors 28 bzw. des Transistors 32 geschaltet ist. Die beiden anderen Kollektoren der beiden Transistoren 28 und 32 sind miteinander und mit dem Steuerungseingang eines steuerbaren Konstantstromgenerators 38 verbunden. Der Emitter des Transistors 26 ist mit dem Emitter des Transistors 32 verbunden, wegegen der Kollektor des Transistors 26 mit dem Kollektor und der Basis eines in Stromspiegelschaltung betriebenen weiteren Mehrfachkollektortransistors 40 verbunden ist. Der zweite Kollektor 40a des Transistor 40 ist mit dem Konstantstromgenerator 38 verbunden, wogegen der Emitter des Transistors 40 auf die Versorgungs-Eingangsklemme 8 geschaltet ist. Der zweite Kollektor 40a des Transistors 40 ist außerdem mit der Klemme 7 des integrierten Schaltkreises 14 verbunden. Mit der Klemme 7 ist ein außerhalb des Schaltkreises befindlicher zeitbestimmender Kondensator 44 verbunden, dessen zweiter Anschluß mit der Klemme 4 des integrierten Schaltkreises verbunden ist, an der der Minuspol der Versorgungsspannung (Masse bzw. 0V) angeschlossen wird.

Der zweite Kollektor 40a des Transistors ist darüber hinaus mit einem im IC 14 vorhanden Latch-Speicher 46 verbunden, dessen Ausgang auf die Basis eines Schalttransistors 48 wirkt. Der Emitter des Transistors 48 liegt an 0V (Masse), während der Kollektor dieses Transistors über einen weiteren Konstantstromgenerator 50 an die Eingangsklemme 8 angeschaltet ist. Der Kollektor ist ferner mit der Ausgangsklemme 1 verbunden, die auf das Gate 52 eines Thyristors 54 aufgeschaltet ist, um den Thyristor in Durchlasrichtung anzusteuern. Der Phasenleiter L ist über die Auslösespule 56 eines Leitungsschutzschalters mit einem Wechselstrom-Anschluß eines Brückengleichrichters 58 verbunden, deren zweiter Wechselstromanschluß mti dem N-Leiter und außerdem mit Erde und einem Schutzleiter PE verbunden ist. Der positive Spannung führende Anschluß des Gleichrichters 58 ist mit der Anode des Thyristors und der negative Anschluß des Gleichrichters 58 mit der Kathode des Thyristors und Masse verbunden. Die Anode des Thyristors ist ferner mit einem Widerstand 60 verbunden, dessen zweiter Anschluß mit der Speisespannungsklemme 8 des Schaltkreises 14 verbunden ist. Parallel zur Klemme 8 und Masse-Klemme 4 liegt ein Glättungs-Kondensator 62. Zur Spannungsstabilisierung dient eine Kette von Z-Diode und Dioden, die hier durch zwei Z-Dioden 66 und 66a symbolisch dargestellt ist. Die Anode der einen Z-Diode 66 ist mit der
Basis eines Transistors 70 verbunden, dessen Emitter mit
der Klemme 6 und einem verstellbaren Widerstand 64 verbunden ist, dessen zweiter Anschluß an die Klemme 8 angeschlossen wird. Der Kollektor des Transistors 70 ist
mit der Konstantstromquelle 38 verbunden. Das Schaltbild
des integrierten Schaltkreises 14 ist lediglich schematisch dargestellt und entspricht im wesentlichen dem
Schaltbild, wie es in dem Prospekt der Firma National
Semiconductor April 1980 zu ersehen ist. Es wurde ergänzt durch den Transistor 70 und die wichtigsten äußeren Schaltelemente. Im Prospekt ist auch ein genaues
Schaltbild mit allen wesentlichen Details veröffentlicht.

Die Wirkungsweise der Anordnung ist nun wie folgt:

Fließt auf der Lastseite kein Strom vom Leiter L gegen
Erde bzw. zum Schutzleiter PE, so steht an den Klemmen 2
und 3 kein Fehlerstromsignal an. Die von einer Hilfsspannungsquelle 36a im integrierten Schaltkreis 14 erzeugte Spannung steht sowohl auf dem nichtinvertierenden
Eingang 18 als auch auf dem invertierenden Eingang 20
des Operationsverstärkers an, wodurch am Ausgang 24 des
Operationsverstärkers ein Mittelspannungssignal abgegeben wird. Aufgrund dieses Signales wird von den Transistoren 28 bzw. 32 auf den Konstantstromgenerator 38 ein
Status-Logisch-Null-Signal (STS = 0) abgegeben, wodurch
der Konstantstromgenerator so eingestellt wird, daß der
evtl. aufgeladene Kondensator 44 mit einem Ladestrom von
$I_1 = 3 \times I_0$ entladen wird. Diese Einstellung baut eine
durch Störimpulse aufgetretene Spannung am Kondensator
44 rasch ab, so daß eine wirksame Störunterdrückung
erreicht wird.

Wenn ⁻. durch Berührung des Leiters L durch einen mit Erde bzw. PE verbundenen Menschen mit einem Körperwiderstand $R_k$ ein Fehlerstrom auftritt, wird in der Sekundärwicklung 12 ein Fehlerstromsignal erzeugt, welches über die Eingangsklemme 2 und den Eingangswiderstand 22 auf den invertierenden Eingang 18 des Verstärkers eingegeben wird. Wenn am Eingang 18 das Signal mit der negativen Halbwelle ansteht, ist der Ausgang 24 des Operationsverstärkers 16 positiv, so daß die Z-Diode 30 über die Transistoren 26 und 40 sowie über den Transistor 32 leitend wird und an dem weiteren Kollektor 32a des Transistors 32 ein Status-Logis-1-Signal (STS = 1) erzeugt wird. Dieses 1-Signal schaltet den Konstantstromgenerator um, so daß der vom Generator gegen Masse fließende Strom $I_1 = I_0$ ist.

Über den Gleichrichter 58 wird über den Vorwiderstand 60 und die Klemme 8 der integrierte Schaltkreis 14 mit Energie versorgt und zwar stabilisiert durch die Diodenkette 66 und 66a. Während der negativen Halbwelle, wenn also am Ausgang des Verstärkers ein positives Signal ansteht, wird - wie oben erwähnt - der Transistor 26 durchgesteuert, der gleichzeitig auch den Transistor 40 in leitenden Zustand bring, wordurch von der Klemme 8 ein Strom hin zum Emitter des Transistors 40 fließt, wodurch an dem zweiten Kollektor 40a ein Strom $I_L$ erzeugt wird, der, um den Konstantstrom $I_0$ vermindert, also mit $I_L - I_0$, den Kondensator 44 (zeitbestimmender Kondensator) auflädt. Die Aufladung des Kondensators 44 erfolgt somit nur während der negativen Halbwelle. Während der positiven Halbwelle an der Klemme 2 wird der Eingang 18 des Operationsverstärkers 16 positiv gegenüber dem Ausgang 24, wodurch die Z-Diode 34 leitend wird, und den Transistor 28 ansteuert, so daß über den weiteren Kollektor 28a ebenfalls ein Status-Logisch-1-Signal (STS = 1) dem Konstantstromgeber 38 zugeführt wird, so daß auch dann ein Strom $I_1 = I_0$ über den Konstantstromgeber nach Null Volt abfließt.

Wenn also ein Wert $3 \times I_0$ vom Konstantstromgenerator 38 abfließt, wird der Kondensator 44 schnell entladen, so daß durch eine Aufladung des Kondensators 44 durch Störimpulse nicht zu einer Auslösung führt. Wenn aufgrund eines Status-1-Signals auf der Leitung 36 vom Konstantstromgeber 38 ein Strom lediglich mit $I_0$ abfließt, dann wird vom Kondensator 44 ein wesentlich geringerer Teil abgezogen, nämlich nur 1/3 des Teiles, der bei Fehlen eines Fehlerstromes abgezogen wird. Die restliche 2/3 des Stromes können dann bei negativem Signal an der Klemme 2 zum Setzen des Speichers 46 bzw. des Latch 46 verwendet werden. Wenn also von dem Kondensator 44 ein größerer Stromanteil zum Latch 46 fließt, wird dieses gesetzt, wodurch der Transistor 48 angesteuert wird, so daß dieser vom leitenden in den Sperrzustand umgesteuert wird, und über den weiteren Konstantstromgeber 50 einen Strom $I_S$ von der Versorgungsspannung hin zu der Steuerelektrode 52 des Thyristors 54 durchläßt, so daß der Thyristor 54 durchgezündet wird und der Auslöser 56 ansprechen kann. Die Größe des Stromes $I_1 = I_0$ bzw. $I_1 = 3 \times I_0$, die der Aufladung des Kondensators 44 entgegenwirkt, wird von der Z-Diode 66, die über eine Leitung 68 mit der Basis eines Transistors 70 verbunden ist, und einem mit dem Emitter des Transistors 70 verbundenen einstellbaren Widerstand 64 bestimmt. Mit letzterem und damit mit dem der Ladung des Kondensators 44 entgegenwirkenden Strom $I_0$ kann der zur Auslösung führende Fehlernennstrom eingestellt werden. Dabei können gleichzeitig die Toleranzen der beteiligten Bauelemente einschließlich des integrierten Schaltkreises 14 sowie des Summenstromwandlers 10 erfaßt werden.

In der Figur 2 ist das Schaltbild gemäß der Figur 1 im wesentlichen unverändert belassen worden, wobei bestimmte, hier nicht interessierende Komponenten zwecks besserer Übersichtlichkeit weggelassen worden sind. Die Speisung des integrierten Schaltkreises erfolgt, wie oben erwähnt, über den Brückengleichrichter 58 und den Vorwiderstand 60. Dem Widerstand 60 folgt eine Entkopplungsdiode 61, und den Eingängen 4 bzw. 8 des integrierten Schaltkreises ist ein Glättungskondensator 62 parallelgeschaltet. Parallel zu den Klemmen 6 und 8 befindet sich der Einstell- bzw. Verstellwiderstand 64. Der Vorwiderstand 60 und die in Reihe damit liegende Diode 61 ist auf der Eingangsklemme 8 geschaltet. Parallel zu den Klemmen 2 und 3 liegt ein Kondensator 76 zur Unterdrückung von Störimpulsen aus dem Netz. Zwischen der Gleichstromquelle 36a und der Wicklung 12 des Summenstromwandlers 10, vorzugsweise - wie in der Zeichnung, Figur 1, dargestellt, zwischen der Klemme 3 und der Wicklung 12, wird ein Kondensator 71 eingesetzt, der in Reihe mit der Sekundärwicklung liegt und zur Gleichstromentkopplung dient.

Im übrigen besteht der Unterschied der Anordnung gemäß der Figur 1 und der der Figur 2 im wesentlichen darin, daß neben dem Summenstromwandler 10 ein weiterer Wandler 11 vorgesehen ist, durch den die Leitungen L und N als eine Wicklung hindurch verlegt sind. Der Wandler 11 besitzt eine weitere Wicklung 13, deren eines Ende mit der Eingangsklemme 5, also dem Ausgang 24 des Operationsverstärkers 16 verbunden ist, wogegen das andere Ende der Wicklung 13 mit einem Kondensator 15 verbunden ist. Ferner ist in der Schaltungsanordnung nach der Figur 2 ein der Auslösespule 56 entsprechendes Auslöserelais 74 eingezeichnet, die über eine Wirklinie 75 auf ein Schaltschloß 77 einwirkt, das im Falle eines Fehlerstromes Kontakte 79 in den Leitungen L und N oder nur einpolig einen Kontakt in der Leitung L öffnet. der Auslösestrom wird der Auslösespule 56 von der Wechselstromseite des Gleichrichters 58 zugeführt. Der Thyristor 54 liegt anodenseiten am Pluspol des Gleichrichters, so daß bei einem am Gate 52 des Thyristors anstehenden Zündsignal die Auslösung des Leitungsschutzschalters in beiden Halbwellen des Netzes erfolgen kann.

Ein Fehlerstrom (veranlaßt durch einen Körperstromwiderstand $R_K$ zwischen L und Erde bzw. Schutzerdeleiter PE), wird als geometrische Summe der Ströme im Phasenleiter und im Neutralleiter N vom Summenstromwandler 10, der zweckmäßigerweise ein Windungszahlenverhältnis von z. B. 1:1000 besitzt, erfaßt und auf die beiden Eingänge des Operationsverstärkers 16 geschaltet.

An Klemme 3 des Schaltkreises liegt ein Kondensator 78 gegen OV (Masse). Er dient zusammen mit dem Kondensator 76 zur Unterdrückung von Störimpulsen aus dem Netz. Ein Varistor 80, der zwischen L und N liegt, bzw. auch in einer anderen, in Figur 8 gezeigten Ausführungsform zwischen dem Leiter N und der Verbindung zwischen der Auslöserspule 56 und dem Gleichrichter 58 liegen kann, schützt die Schaltung gegen Überspannungsimpulse aus dem Netz.

Die letztgenannte, nicht gezeichnete Anordnung hat den Vorteil, daß die Impendanz der Auslöserspule 56 zum Überlastungsschutz des Varistors 80 ausgenutzt werden kann. Durch die Aufschaltung des Ausgangs 24 des Operationsverstärkers 16 auf die Wicklung 13 des zweiten Wandlers 11, der z. B. ein Windungszahlen-Verhältnis 1:200 besitzt, kann der Neutralleiter auf Erdschluß überwacht werden.

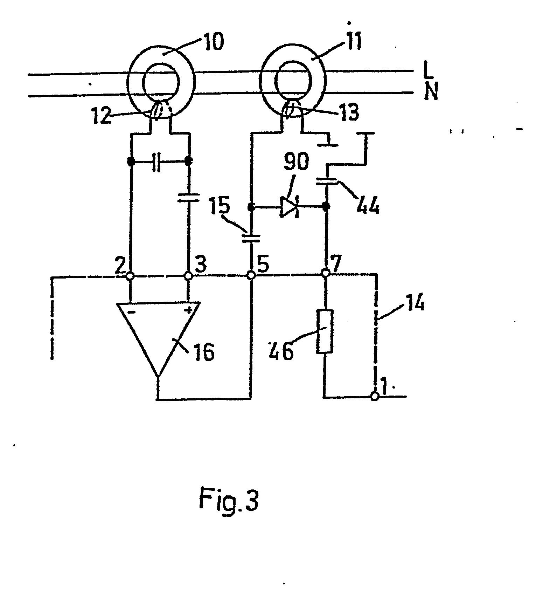

Eine Verbesserung der Überwachung des Neutralleiters auf Erdschluß erfolgt mit einer Schaltungsanordnung gemäß der Figur 3. Bei der Neutralleiterüberwachung ist bei einem Erdschlußfehler eine möglichst schnelle und sichere Auslösung des Schalters erwünscht. Gemäß der Anordnung der Figur 2 ist die Wicklung 13 des Wandlers 11 mit dem Ausgang des Operationsverstärkers verbunden. In der Anordnung gemäß Figur 3 ist an der Ausgangsklemme 5 des Schaltkreises, die mit dem Operationsverstärkerausgang in Verbindung steht, ein Anschluß des Kondensators 15 angeschlossen, wogegen der zweite Anschluß des Kondensators mit einem Ende der Wicklung 13 verbunden ist. Das andere Ende der Wicklung 13 liegt an Null Volt (Masse). Zwischen dem zweiten Anschluß des Kondensators 15 und der Klemme 7 ist eine Diode 90 angeordnet, wobei die Kathode der Diode 90 an Klemme 7 liegt. An Klemme 7 ist auch der Kondensator 44 angeschlossen, dessen zweiter Anschluß an Masse liegt. Die bei einem Erdschluß des Neutralleiters selbst erregende mittelfrequente Schwingung lädt dann mit ihrer ersten, die Schwellenspannung der Diode 90 überschreitenden Halbwelle den Kondensator 44 soweit auf, daß das im Schaltkreis 14 befindliche Latch 46 gesetzt wird und die Zündung des Thyristors 54 und damit die Auslösung des Schutzschalters einleitet (vgl. Beschreibung Figur 1 und 2).

## Anspruch

1. Schaltungsanordnung zur Erfassung eines Fehlerstromes in einem aus wenigstens einem Phasenleiter und einem Neutralleiter gebildeten Netz, mit einem Summenstromwandler, dessen Primärwicklung durch die Phasenleiter und den Neutralleiter gebildet ist und dessen Sekundärwicklung bei Auftreten eines Fehlerstromes ein Fehlerstromsignal abgibt, mit einer Einrichtung, insbesondere einem handelsüblichen integrierten Schaltkreis, zum Verarbeiten und Verstärken des Fehlerstromsignals, die einen Operationsverstärker, auf dessen Eingänge die Enden der Sekundärwicklung geschaltet sind, und einen durch einen in Abhängigkeit vom Fehlerstromsignal auf- bzw. entladbaren Kondensator setzbaren Speicher (Latch) zur Erzeugung eines vom Fehlerstromsignal abhängigen Ausgangssignals enthält  mit einem durch das Ausgangssignal der Einrichtung angesteuerten steuerbaren Halbleiterventil, mit einem weiteren Wandler, dessen Primärwicklung durch die Netzleiter gebildet und dessen weitere Wicklung mit ihrem einen Ende an den Ausgang des Operationsverstärkers und mit ihrem anderen Ende an Null Volt angeschlossen ist, wobei zwischen dem Ausgang des Operationsverstärkers und dem einen Ende der weiteren Wicklung des weiteren Wandlers mit diesem ein weiterer Kondensator in Reihe geschaltet ist, der zusammen mit der weiteren Wicklung einen Schwingkreis bildet, der bei Auftreten einer Rückkopplung durch einen Erdschluß des Neutralleiters über den Operationsverstärker eine mittelfrequente Schwingung anfacht, und mit einem Auslöser zum Betätigen von das Netz (Hauptstromkreis) abschaltenden Schaltkontakten, welcher Auslöser beim Durchsteuern des Halbleiterventiles aufgrund des Setzens des Speichers anspricht, <u>dadurch gekennzeichnet,</u> daß zwischen dem weiteren Kondensators (15) und der Sekundärwicklung (13) die Anode einer Diode (90) anschließt, deren Kathode mit einer mit dem Speicher (46) der Einrichtung (14) verbundenen Anschlußklemme (7) (Speicheranschluß 7) verbunden ist, und daß zwischen der Kathode der Diode (90) und Masse ein zeitbestimmender Kondensator (44) liegt, der sich mit dem in der Einrichtung befindlichen Latch-Speicher (46) in Reihe befindet und sich bei einer Schwingungsamplitude, deren Spannung über der Schwellenspannung der Diode liegt, auflädt und den Latch-Speicher (46) setzt und damit über das Halbleiterventil (54) das Relais (56) des Auslösers ansteuert.

Fig.1

Fig.2

Fig.3

## Europäisches Patentamt
## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | US-A-3 953 766 (E.K. HOWELL et al.) <br> * Spalte 1, Zeile 6 - Spalte 2, Zeile 35; Figuren 1-3 * <br> ----- | 1 | H 02 H 3/33 |

RECHERCHIERTE SACHGEBIETE (Int Cl 4)

H 02 H 3/32
H 02 H 3/33

Der vorliegende Recherchenbericht wurde für alle Patentansprüche erstellt.

| Recherchenort | Abschlußdatum der Recherche | Prüfer |
|---|---|---|
| BERLIN | 15-07-1987 | LEMMERICH J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82